# EUROPEAN PATENT APPLICATION

(11) **EP 2 268 005 A2**
(43) Date of publication of application: **29.12.2010**
(21) Application number: 09178331.6
(22) Date of filing: 08.12.2009
(51) Int. Cl.: H04N 5/445, G06F 3/033, G06F 3/048

(54) **Display apparatus for providing a user menu and method for providing user interface (ui) applicable thereto**

(30) Priority: 09.03.2009 KR 20090019856
(71) Applicant: Samsung Electronics Co., Ltd., Suwon-si, Gyeonggi-do (KR)
(72) Inventor: Cha, Tae-hwan, Gyeonggi-do (KR)
(74) Representative: Walaski, Jan Filip

(57) **Abstract**

Provided are a display apparatus and a method for providing a user interface (UI) applicable thereto. The display apparatus includes: a display unit which displays a user menu on a first area of a screen in a linear or annular pattern; a gesture recognizing unit which recognizes a user gesture; and a control unit, wherein if a direction of the user gesture recognized by the gesture recognizing unit is within a first range from a first direction, the control unit controls an item arranged at a predetermined location on the screen to be selected from among items listed in the user menu, wherein the first direction is substantially perpendicular to a direction of the displayed user menu. As a result, the user may be able to operate the user menu conveniently with bodily gestures such as hand or foot gestures.

## Description

The present invention relates to a display apparatus and a method for providing a user interface (UI) applicable thereto, and more particularly, to a display apparatus capable of recognizing user's bodily gestures and operating a user menu accordingly and a method for providing a user interface (UI) applicable thereto.

Gesture recognition apparatuses have recently been developed, which recognize user's bodily gestures and interpret these into user commands. The gesture recognition apparatus enables a user to input his command by simply making bodily movements, without having to operate any mechanical device. This has made the gesture recognition apparatus a next-generation user interface apparatus.

However, it is still necessary to develop a user menu for a user of a television (TV) which is optimally operable based on user gestures, so that the user can input his command without having to operate a remote controller.

Exemplary embodiments of the present invention overcome the above disadvantages and other disadvantages not described above. Also, the present invention is not required to overcome the disadvantages described above, and an exemplary embodiment of the present invention may not overcome any of the problems described above.

An exemplary embodiment of the present invention provides a display apparatus which may include: a display unit which displays a user menu on a first area of a screen in one of a linear and annular pattern; a gesture recognizing unit which recognizes a user gesture; and a control unit, wherein if a direction of the user gesture recognized by the gesture recognizing unit is within a first range and from a first direction, the control unit controls an item arranged at a predetermined location on the screen to be selected from among items listed in the user menu, wherein the first direction is substantially perpendicular to a direction of the displayed user menu.

According to an exemplary embodiment of the present invention, if the selected item does not have a submenu, the control unit may control one of a corresponding function of the selected item to be executed and an icon to execute the corresponding function of the selected item to be displayed on a second area of the screen.

According to an exemplary embodiment of the present invention, if the selected item has a submenu, the control unit may control the selected item to be displayed on a second area of the screen and controls the submenu to be displayed on the first area of the screen.

According to an exemplary embodiment of the present invention, if a direction of the user gesture recognized by the gesture recognizing unit is within a first range and from a second direction, and if the submenu is displayed on the first area, the control unit may control the selected item to disappear from the second area and the user menu to be displayed on the first area, and the second direction may be substantially perpendicular to a direction of a the displayed submenu and opposite to the first direction.

According to an exemplary embodiment of the present invention, the display unit may display the user menu horizontally on the screen in a linear pattern, and the first area is located at an upper portion of the screen, the second area is located at a lower portion of the screen, the first direction is downward with respect to the screen, and the second direction is upward with respect to the screen.

According to an exemplary embodiment of the present invention, if a direction of the user gesture recognized by the gesture recognizing unit is within the first range and from the first direction, and if the submenu is displayed on the first area, the control unit may control a submenu item arranged at the predetermined location to be selected from among items listed in the submenu.

According to an exemplary embodiment of the present invention, if the selected item of the submenu does not have a submenu, the control unit may control one of a corresponding function of the selected item to be executed and an icon to execute the corresponding function of the selected item to be displayed on the second area of the screen, and if the selected item of the submenu has a second submenu, the control unit may control the selected item to be displayed on the second area of the screen and the second submenu of the submenu to be displayed on the first area of the screen.

According to an exemplary embodiment of the present invention, if a direction of the user gesture recognized by the gesture recognizing unit is within a second range and from one of a third direction and a fourth direction, the control unit may control the items of the user menu to be scrolled in the one of the third direction and the fourth direction, wherein the one of the third and the fourth direction is substantially perpendicular with respect to the direction of the displayed user menu.

According to an exemplary embodiment of the present invention, the control unit may control the items of the user menu to be scrolled rotationally.

According to an exemplary embodiment of the present invention, the display unit may display the user menu horizontally on the screen in a linear pattern, and the first area is located at an upper portion of the screen, the second area is located at a lower portion of the screen, the third direction is leftward with respect to the screen, and the fourth direction is rightward with respect to the screen.

According to an exemplary embodiment of the present invention, the control unit may control the predetermined location to be indicated on the screen.

According to an exemplary embodiment of the present invention, the user gesture may include one of a movement of the user's hand and a movement of the user's foot.

According to an exemplary embodiment of the present invention, the gesture recognizing unit may include a camera which captures information regarding the user gesture.

Another exemplary embodiment of the present invention may provide a method for providing a user interface (UI), in a display apparatus capable of recognizing a user gesture, the method comprising: displaying a user menu on a first area of a screen in one of a linear and a annular pattern; recognizing the user gesture; and if a direction of the user gesture recognized is within a first range from a first direction, selecting an item arranged at a predetermined location from among items listed in the user menu, wherein the first direction is substantially perpendicular to a direction of the displayed user menu.

According to an exemplary embodiment of the present invention, if the selected item does not have a submenu, the method may further include one of executing a corresponding function of the selected item and displaying an icon to execute the corresponding function of the selected item on a second area of the screen.

According to an exemplary embodiment of the present invention, if the selected item has a submenu, the method may further include displaying the selected item on a second area of the screen and displaying the submenu on the first area of the screen.

According to an exemplary embodiment of the present invention, if a direction of the user gesture recognized is within a first range and from a second direction, and if the submenu is displayed on the first area, the method may further include causing the item to disappear from the second area and displaying the user menu on the first area, wherein the second direction is substantially perpendicular to a direction of the displayed submenu and opposite to the first direction.

According to an exemplary embodiment of the present invention, the displaying may include displaying the user menu horizontally on the screen in a linear pattern, and the first area is located at an upper portion of the screen, the second area is located at a lower portion of the screen, the first direction is downward with respect to the screen, and the second direction is upward with respect to the screen.

According to an exemplary embodiment of the present invention, if a direction of the user gesture recognized is within the first range and from the first direction, and if the submenu is displayed on the first area, the method may further include selecting a submenu item arranged at the predetermined location from among items listed in the submenu.

According to an exemplary embodiment of the present invention, if the selected item of the submenu does not have a submenu, the method may further include one of executing a corresponding function of the selected item and displaying an icon to execute the corresponding function of the selected item on the second area of the screen, and wherein if the selected item of the submenu has a submenu, the method further comprises displaying the selected item on the second area of the screen and displaying the submenu of the submenu on the first area of the screen.

According to an exemplary embodiment of the present invention, if a direction of the user gesture recognized is within a second range from one of a third direction and a fourth direction, the method may further include scrolling the items of the user menu in the one of the third direction and the fourth direction, wherein the one of the third and the fourth direction is substantially perpendicular with respect to the direction of the displayed user menu.

According to an exemplary embodiment of the present invention, the scrolling may include scrolling the items of the user menu rotationally.

According to an exemplary embodiment of the present invention, the displaying may include displaying the user menu horizontally on the screen in a linear pattern, and the first area is located at an upper portion of the screen, the second area is located at a lower portion of the screen, the third direction is leftward with respect to the screen, and the fourth direction is rightward with respect to the screen.

According to an exemplary embodiment of the present invention, the method may further include indicating the predetermined location on the screen.

According to an exemplary embodiment of the present invention, the user gesture may further include one of a movement of the user's hand and a movement of the user's foot.

According to an exemplary embodiment of the present invention, the recognizing of the user gesture may be performed by a camera.

Additional and/or other aspects and advantages of the invention will be set forth in part in the description which follows and, in part, will be obvious from the description, or may be learned by practice of the invention.

The above and/or other aspects of the present invention will be more apparent by describing certain exemplary embodiments of the present invention with reference to the accompanying drawings, in which:
FIG. 1 is a detailed block diagram of a television (TV) according to an exemplary embodiment of the present invention;
FIG. 2 is a flowchart provided to explain a method for providing a user interface (UI) according to an exemplary embodiment of the present invention;
FIG. 3 is a view illustrating a menu screen according to an exemplary embodiment of the present invention;
FIGS. 4A and 4B are views illustrating a submenu presented in accordance with a downward hand gesture, according to an exemplary embodiment of the present invention;
FIGS. 4C and 4D are views illustrating a screen with an icon presented thereon to perform a contrast adjust of an item which is selected in accordance with a downward hand gesture, according to an exemplary embodiment of the present invention;
FIGS. 5A and 5B are views illustrating a screen on which an upper menu is presented in accordance with an upward hand gesture, according to an exemplary embodiment of the present invention;
FIGS. 6A and 6B are views illustrating a screen on which a menu is scrolled leftward in accordance with a leftward hand gesture, according to an exemplary embodiment of the present invention;
FIGS. 7A and 7B are views illustrating a screen on which a menu is scrolled rightward in accordance with a rightward hand gesture, according to an exemplary embodiment of the present invention;
FIG. 8 is a view illustrating a screen on which a predetermined area indicated by a dotted line according to an exemplary embodiment of the present invention;
FIG. 9 is a view illustrating a screen on which a predetermined area is presented on the left-most side according to an exemplary embodiment of the present invention; and
FIG. 10 is a view illustrating a menu arranged in an annular pattern according to an exemplary embodiment of the present invention.

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the exemplary embodiments of the present invention can be carried out without those specifically defined matters. Also, well-known functions or constructions are not described in detail since they would obscure the invention with unnecessary detail.

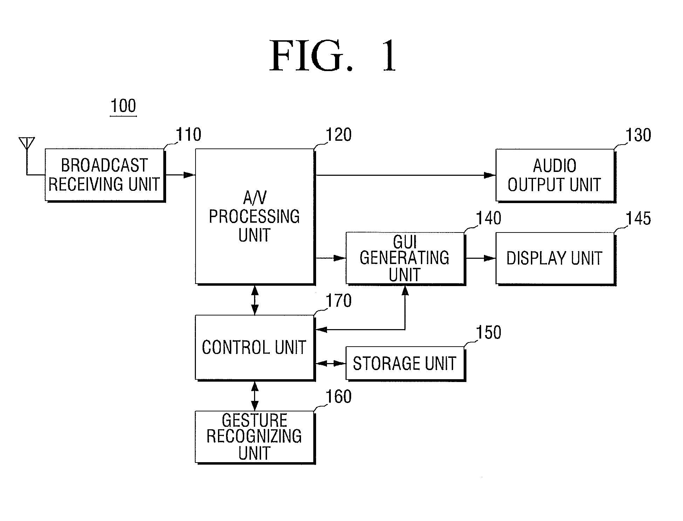

FIG. 1 is a block diagram of a television (TV) 100 according to an exemplary embodiment of the present invention. Referring to FIG. 1, the TV 100 includes a broadcast receiving unit 110, an audio/video (A/V) processing unit 120, an audio output unit 130, a graphic user interface (GUI) generating unit 140, a display unit 145, a storage unit 150, a gesture recognizing unit 160, and a control unit 170.

The broadcast receiving unit 110 receives a signal from a broadcasting station or satellite in a wired or wireless manner and demodulates the received signal. The broadcast receiving unit 110 also receives broadcast information including electronic program guide (EPG) information regarding a broadcast program.

The A/V processing unit 120 performs signal processing such as video decoding, video scaling, audio decoding, or the like, regarding a video or audio signal received from the broadcast receiving unit 110 and the control unit 170. The A/V processing unit 120 then outputs the video signal to the GUI generating unit 140, and outputs the audio signal to the audio output unit 130.

If the received video and audio signal is stored in the storage unit 150, the A/V processing unit 120 stores the signal to the storage unit 150 in a compressed form.

The audio output unit 130 outputs an audio signal outputted from the A/V processing unit 120 to either a speaker, or an audio output terminal to which an external speaker is connected.

The GUI generating unit 140 generates a graphic user interface (GUI) and provides this to a user. By way of example, the GUI generating unit 140 may generate a GUI of a user menu which is provided in an on-screen display (OSD) manner.

The display unit 145 displays a video outputted from the A/V processing unit 120. The display unit 145 may display a video to which a GUI (e.g., user menu) generated at the GUI generating unit 140 is added. By way of example, the display unit 145 may display a user menu generated at the GUI generating unit 140 on a first area of a screen in a linear or annular arrangement. Herein, the term 'first area' refers to an area where the user menu is presented, and may be one of upper, lower, left or right sides of the screen.

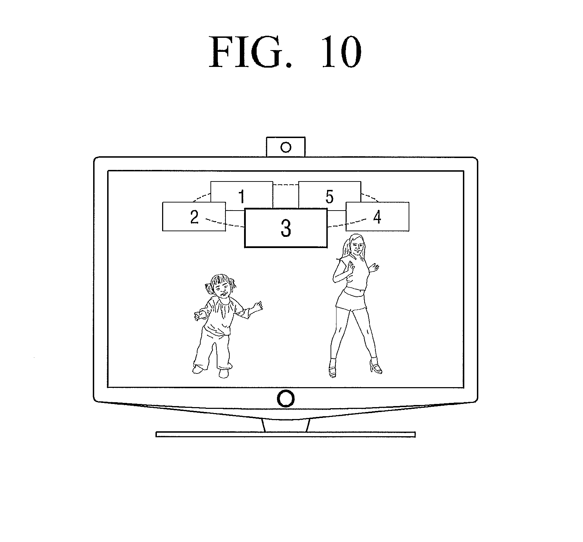

The user menu may be arranged horizontally along the screen in a linear pattern. Alternatively, the user menu may be displayed in an annular arrangement, and in this case, the user menu may be arranged in a three-dimensional (3D) ring configuration and so is displayed with depth on the screen, as exemplarily illustrated in FIG. 10.

The storage unit 150 stores a record file which includes a received multimedia content. The storage unit 150 may be a hard disk, a non-versatile memory, or the like.

The operation recognizing unit 160 recognizes user gestures. By way of example, the gesture recognizing unit 160 may recognize user's hand or foot gesture and determine information about the orientation where the user's hand or foot moves.

The gesture recognizing unit 160 may recognize the user gestures using a camera. By way of example, the gesture recognizing unit 160 extracts only a skin color area from the entire image captured by the camera and determines an area having a hand profile to be a hand area. The gesture recognizing unit 160 then continues searching the adjacent areas of the recognized hand area and thus is able to recognize the hand position on a real-time basis.

Generally, the gesture recognizing unit 160 may employ contour-based method or a model-based method to recognize a hand.

Briefly, the contour-based recognition recognizes a hand profile by extracting a characteristic which is a representation of a hand. Since the contour-based recognition uses a 2D image, the accuracy of recognition may deteriorate if a hand profile is varied due to finger movement or rotate gesture of a hand. Accordingly, the contour-based recognition is generally employed to recognize a simple hand posture which mainly includes the position and shape of a hand and fingers at a predetermined time point.

The model-based recognition recognizes a user's hand by 3D-modeling a targeting hand shape, comparing the modeled hand shape with predefined models, and selecting a model that matches with the highest accuracy. According to the model-based recognition, the gesture recognizing unit 160 acquires 3D information regarding a user's hand based on the images captured through the camera, compares the acquired 3D information with predefined models, and selects a most similar hand model. However, although the model-based recognition can recognize various hand gestures with accuracy, this method requires processing of a heavy amount of data for hand gesture recognition and thus has a lagging processing speed.

As explained above, the gesture recognizing unit 160 recognizes hand gestures using the contour-based or model-based recognition method. However, the gesture recognizing unit 160 may also employ other appropriate gesture recognition method besides those exemplified above. Furthermore, the gesture recognizing unit 160 may recognize foot gesture using a foot profile or 3D foot model.

The control unit 170 interprets a user command based on the user gesture transmitted from the gesture recognizing unit 160, and controls the overall operation of the TV 100 in accordance with the user command.

By way of example, if a user gesture recognized by the gesture recognizing unit 160 is within a first range from a first direction which is substantially opposite, i.e., substantially perpendicular to the display of the user menu, the control unit 170 controls so that an item at a predetermined location is selected from among items listed in the user menu.

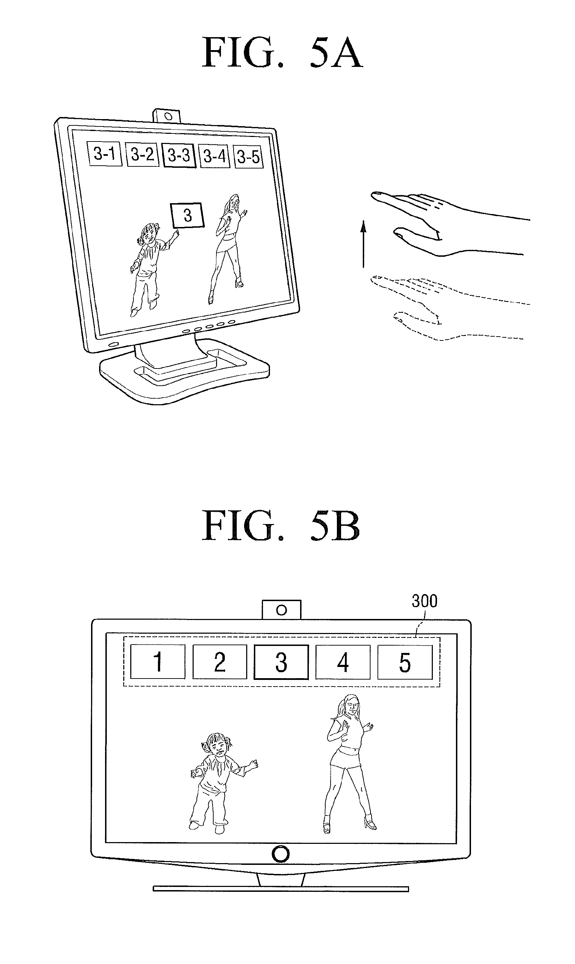

In other words, if the display layout of the user menu is in a horizontal direction, i.e., with respect to the plane of the screen, the first direction can be in a substantially perpendicular (e.g., vertical) direction with respect to the horizontal display layout of the user menu. An example of this is shown in FIG. 5A.

However, it should be noted that the first direction can also be a direction which is substantially perpendicular to the plane of the screen. Since the gesture recognizing unit 160 acquires 3D information regarding the user's hand based on the images captured through the camera, one of skill in the art would understand that movements which are substantially perpendicular, either with respect to the user menu displayed within the screen, or with respect to the plane of the screen itself, can readily be detected and applied to the operation of the present invention.

The term 'predetermined location' herein refers to a location on the screen where an item placed thereon is selected, from among the items listed in the user menu. By way of example, if the predetermined location is a center, an item placed at the center of the user menu is selected.

The control unit 170 may control so that the predetermined location can be indicated on the screen. Accordingly, if the predetermined location is center, the control unit 170 may enlarge or highlight an item at the center to indicate that the predetermined location is the center. Alternatively, the control unit 170 may indicate the predetermined location by drawing a line around the predetermined location.

The first direction is changeable in accordance with a location where a first area is placed. Herein, the 'first area' is where the user menu is displayed. By way of example, if the user menu is in a horizontal layout on an upper portion of the screen and thus the first area is on the upper portion of the screen, the first direction corresponds to a downward direction. Accordingly, if a user moves his hand downward, the control unit 170 selects one of the listed items that is placed at the predetermined location. On the other hand, if the user menu is a lower portion of the screen and thus the first area is the lower portion of the screen, the first direction may be an upward direction.

The 'first range' herein refers to a range of angle at which the control unit 170 determines the user gesture to be in the first or second direction. Accordingly, in a state that the first direction is a downward direction, the control unit 170 recognizes even a gesture which is obliquely downward to be in a downward direction, if the user gesture is within the first range from the first direction. In other words, the control unit 170 compensates an error within the first range, taking into consideration that it is difficult for a user to make a gesture in an exact vertical downward direction.

By way of example, the first range may include a user gesture which is between 0 and 45 degrees from an axis of the first or second direction. However, this is only an example, and therefore, the first range may include degrees other than those mentioned above.

Meanwhile, if a selected item does not have a submenu, the control unit 170 controls so that a corresponding function is executed or an icon to execute the corresponding function is displayed on a second area of the screen.

Herein, the 'second area' is an area where an icon to execute the corresponding function of the selected item is displayed. The second area is opposite to the first area. Accordingly, if the first area is upper portion of the screen, the second area is the lower portion of the screen, and vice versa. Likewise, if the first area is the left side of the screen, the second area is the right side of the screen, and vice versa.

Icons in various forms may be employed to execute the corresponding function of the selected item. By way of example, if a selected item is a contrast adjustment, the corresponding icon may take the form of an adjusting bar to facilitate adjustments.

Meanwhile, if the selected item has a submenu, the control unit 170 may control so that the selected item is presented on the second area, and the submenu is presented on the first area. As the control unit 170 displays the selected item on the second area and its submenu on the first area, user is able to check the upper menu of the currently-displayed menu at a glance.

Additionally, if a user gesture is recognized by the gesture recognizing unit 160 in a state that the submenu is presented on the first area, and if the user gesture is within the first range from the second direction, the control unit 170 controls so that the item disappears from the second area and the user menu is displayed on the first area. Accordingly, upon recognizing user gesture in the second direction, the control unit 170 causes the upper menu to appear on the first area.

The second direction is vertical to the user menu layout, and opposite to the first direction. If the user menu is in a horizontal layout and the first direction is downward direction, the second direction is the upward direction. If the user menu is in a horizontal layout and the first direction is upward direction, the second direction is the downward direction.

As explained above, in accordance with the input of a user gesture in the second direction, the control unit 170 displays an upper menu of the currently-displayed menu on the first area.

The control unit 170 may control so that, if there is a submenu displayed on the first area and a user gesture recognized by the gesture recognizing unit 160 is within the first range from the first direction, the control unit 170 controls so that an item at a predetermined location is selected from among the items listed in the submenu.

If the selected item of the submenu does not have a submenu, the control unit 170 may control so that the corresponding function of the selected item is executed, or an icon to execute the corresponding function of the selected item is displayed on the second area of the screen. If the selected item of the submenu has a submenu, the control unit 170 may control so that the selected item is displayed on the second area of the screen, and the submenu of the submenu is displayed on the first area.

In other words, the control unit 170 may execute a corresponding user command based on the user gesture in the first direction, even when the submenu is displayed on the first area. The control unit 170 may also cause corresponding function of the user gesture inputted in the first or second direction, regardless of the level of the menu currently displayed on the first area.

Meanwhile, if a user gesture is within a second range from a third or fourth direction which is horizontal to the direction of the user menu layout, the control unit 170 may control so that the items of the user menu are scrolled in the third or fourth direction.

Herein, the third direction and the fourth direction are vertical to the first direction and the second direction, respectively. Additionally, the third direction is opposite to the fourth direction. Accordingly, if the menu is in a horizontal layout with respect to the screen and the third direction is the leftward direction, the fourth direction is the rightward direction. In contrast, if the menu is in a horizontal layout with respect to the screen and the third direction is the rightward direction, the fourth direction is the leftward direction.

Similar to the first range, the second range may represent a range of angle at which the control unit 170 determines a user gesture to be in the third or fourth direction. Accordingly, if the third direction is leftward and the user gesture is oblique in the leftward direction, the control unit 170 may recognize the user gesture to be in the leftward direction if the user gesture is within the second range. In other words, the control unit 170 compensates an error within the second range, taking into consideration that it is difficult for a user to make a gesture in an exact horizontal leftward direction.

By way of example, the second range may include a user gesture which is between 0 and 45 degrees from an axis of the third or fourth direction. However, this is only an example, and therefore, the second range may include degrees other than those mentioned above.

Additionally, the control unit 170 may control so that the items on the user menu are scrolled rotationally. Accordingly, if the user scrolls leftward, an item at the left-most side moves to the right-most side, and the rest of a certain limited number of items are scrolled leftward in sequence. Likewise, if the user scrolls rightward, an item at the right-most side moves to the left-most side, and the rest of a certain limited number of items are scrolled rightward in sequence.

As explained above, the TV 100 is able to provide a user menu which is optimally operable in accordance with the user gestures.

Herein, the first area, the second area, the first direction, the second direction, the third direction and the fourth direction are determined in association with each other. Accordingly, if the first area is the upper portion of the screen and the menu is displayed in a horizontal layout on the first area, the second area is the lower portion of the screen, and the first direction is the downward direction, the second direction is the upward direction, the third direction is the leftward direction, and the fourth direction is the rightward direction.

If the first area is the lower portion of the screen and the menu is displayed in a horizontal layout on the first area, the second area is the upper portion of the screen, and the first direction is the upward direction, the second direction is the downward direction, the third direction is the leftward direction, and the fourth direction is the rightward direction.

If the first area is the left side of the screen and the menu is displayed in a vertical layout on the first area, the second area is the right side of the screen, and the first direction is the rightward direction, the second direction is the leftward direction, the third direction is the upward direction, and the fourth direction is the downward direction.

If the first area is the right side of the screen and the menu is displayed in a vertical layout on the first area, the second area is the left side of the screen, and the first direction is the leftward direction, the second direction is the rightward direction, the third direction is the upward direction, and the fourth direction is the downward direction.

As explained above, a user menu may be presented in a variety of manners, and according to the direction of the user menu layout, functions in connection with the directions of the user gestures may change.

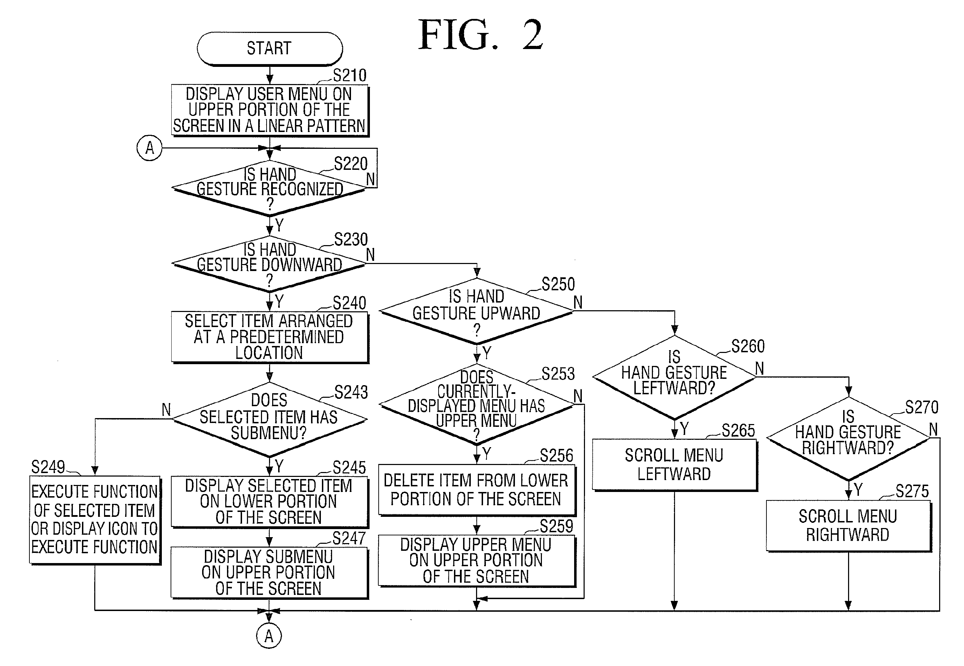

Referring to FIG. 2, a method for providing a user interface (UI) to operate a user menu based on user gestures will be explained below. FIG. 2 is a flowchart provided to explain a method for providing a user interface (UI) according to an exemplary embodiment of the present invention. More specifically, the UI providing method according to an exemplary embodiment of the present invention will be explained below with reference to a particular example in which the first area is the upper portion of the screen, the menu is displayed in a horizontal layout on the first area, the second area is the lower portion of the screen, and the first direction is the downward direction, the second direction is the upward direction, the third direction is the leftward direction, and the fourth direction is the rightward direction.

At S210, the TV 100 displays a user menu on the upper portion of the screen in a linear pattern. The TV 100 may display the user menu in an annular pattern.

At S220, the TV 100 determines whether a user hand gesture is recognized or not. If the user hand gesture is recognized at S220-Y and the recognized user hand gesture is in a downward direction at S230-Y, the TV 100 selects an item placed at a predetermined location at S240. By way of example, the TV 100 may select an item located at the center of the screen, in response to a downward hand gesture.

At S243, the TV 100 determines whether the selected item has a submenu or not. If the selected item has a submenu at S243-Y, the TV 100 presents the selected item on the lower portion of the screen at S245. Additionally, at S247, the TV 100 presents the submenu of the selected item on the upper portion of the screen.

If the selected item does not have a submenu at S243-N, at S249, the TV 100 executes a corresponding function of the selected item, or displays an icon to execute the corresponding function. By way of example, if a selected item is a contrast adjustment, the TV 100 may display an adjusting bar on the lower portion of the screen, in response to a downward user gesture.

Meanwhile, if the user hand gesture is in an upward direction at S250-Y, at S253, the TV 100 determines whether or not the currently-displayed menu has an upper menu. If the currently-displayed menu has an upper menu at S253-Y, the TV 100 causes the item to disappear from the lower portion of the screen at S256. Then at S259, the TV 100 displays the upper menu on the upper portion of the screen.

If a user hand gesture is in a leftward direction at S260-Y, the TV 100 scrolls the user menu leftward at S265. If the user hand gesture is in a rightward direction at S270-Y, the TV 100 scrolls the user menu in a rightwald direction at S275. The TV 100 may scroll a certain limited number of items rotationally.

Upon completion of the corresponding function of the recognized user hand gesture, the TV 100 determines whether there is a user hand gesture newly recognized, that is, the TV 100 waits for the next command.

With the UI providing method explained above, the user is able to operate a user menu conveniently with his hand gestures, and does not have to use a remote controller.

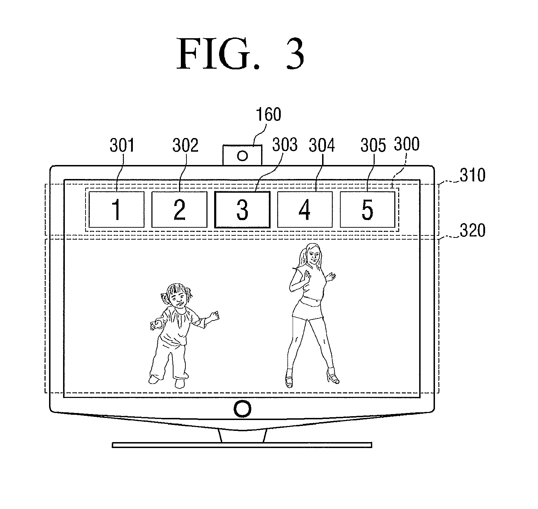

Hereinbelow, a user menu screen according to an exemplary embodiment of the present invention will be explained in detail with reference to FIG. 3.

Referring to FIG. 3, the screen of the TV 100 may include an upper portion 310 as the first area and a lower portion 320 as the second area. A user menu 300 is presented on the upper portion 310. The user menu 300 includes a first item 301, a second item 302, a third item 303, a fourth item 304, and a fifth item 305. The gesture recognizing unit 160 may include a camera, and attached to an upper portion of the TV bezel.

Among the items of the user menu 300, the third item 303 at the center of the screen is indicated with a thicker line, which represents that the predetermined location is the center and that the third item 303 will be selected in response to a downward user hand gesture. As explained above, the TV 100 may indicate the predetermined location by drawing a thicker line around the item at the predetermined location.

The layout of the user menu such as the one illustrated in FIG. 3 keeps the overlain area of the screen as minimum as possible, and it is also convenient for a user to operate the user menu with hand gestures.

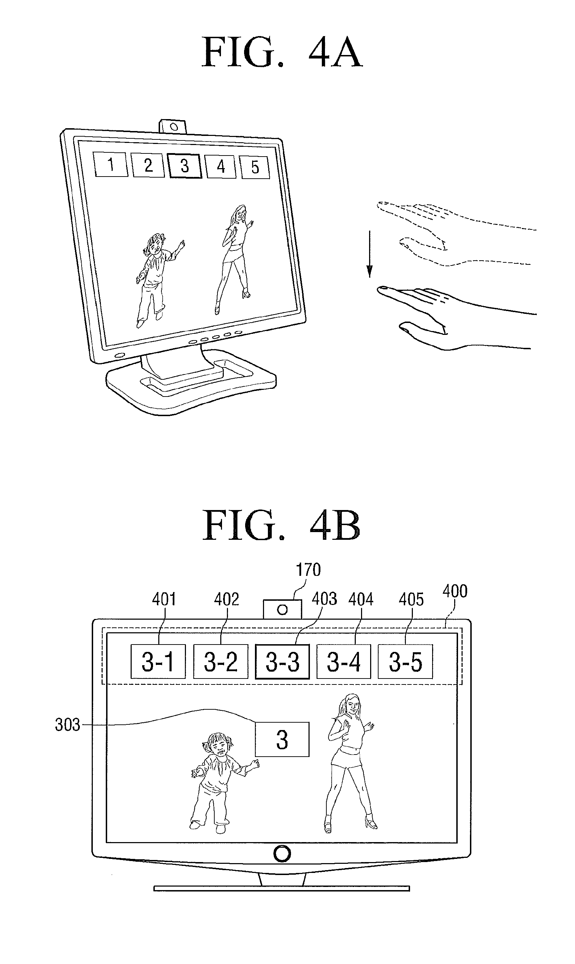

An example of recognizing a downward user hand gesture will be explained below, with reference to FIGS. 4A to 4D. FIGS. 4A and 4B are views illustrating a submenu presented in accordance with a downward hand gesture, according to an exemplary embodiment of the present invention.

If a user inputs a downward hand gesture as illustrated in FIG. 4A, the TV 100 displays a screen as illustrated in FIG. 4B in which the third item 303 is selected. More specifically, in response to the recognition of the downward hand gesture, the TV 100 displays the third item 303 on the lower portion 320, and displays the submenu 400 of the third item 303 on the upper portion 310 of the screen. The submenu 400 includes a 3-1 item 401, a 3-2 item 402, a 3-3 item 403, a 3-4 item 404, and a 3-5 item 405.

Accordingly, in response to a downward user hand gesture, the TV 100 selects an item at the predetermined location, and if the selected item has a submenu, displays the submenu of the selected item as illustrated in FIG. 4B.

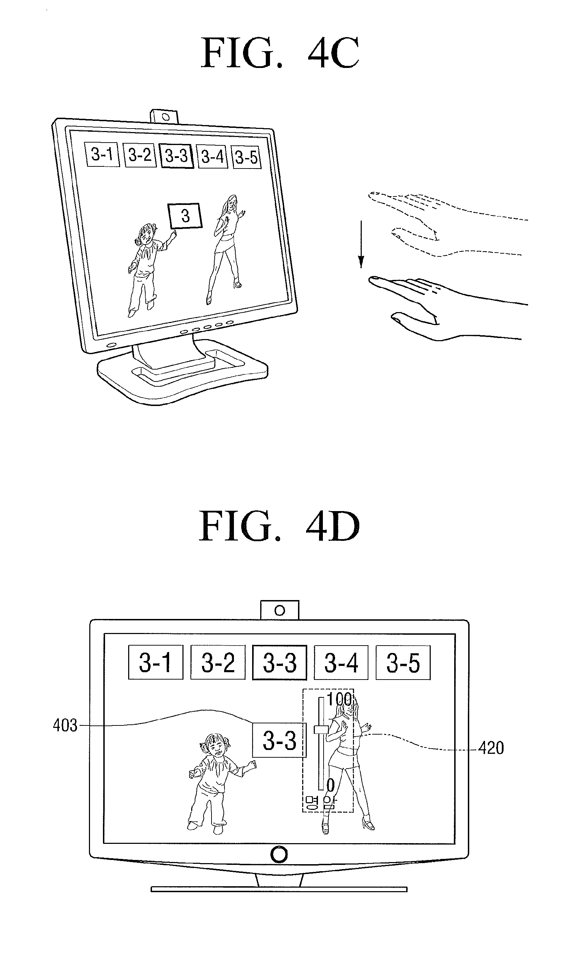

FIGS. 4C and 4D are views illustrating a screen with an icon presented thereon to perform a contrast adjustment of an item which is selected in accordance with a downward hand gesture, according to an exemplary embodiment of the present invention.

As illustrated in FIG. 4C, if the submenu 400 of FIG. 4B is displayed and the user inputs a downward hand gesture, the TV 100 displays the screen as illustrated in FIG. 4D on which an icon to execute the corresponding function is presented.

Accordingly, in response to a downward hand gesture of the user as illustrated in FIG. 4C, the TV 100 selects the 3-3 item 403. Since the 3-3 item 403 does not have a submenu and relates to a contrast adjustment, the TV 100 displays an icon 420 in the form of a contrast adjusting bar on the lower portion of the screen.

As described above, in response to a downward hand gesture of the user, the TV 100 selects an item at the predetermined location, and if the selected item does not have a submenu, displays an icon for executing the function on the lower portion as illustrated in FIG. 4D.

An example of recognizing an upward user hand gesture will be explained below, with reference to FIGS. 5A and 5B. FIGS. 5A and 5B are views illustrating a screen on which an upper menu is presented in accordance with an upward hand gesture, according to an exemplary embodiment of the present invention

FIG. 5A illustrates a screen on which the third item and its submenu are displayed. Referring to FIG. 5B, in response to an upward hand gesture, the TV 100 displays the user menu 300 which is the upper menu of the third item. In other words, the upward hand gesture corresponds to a command to display the upper menu.

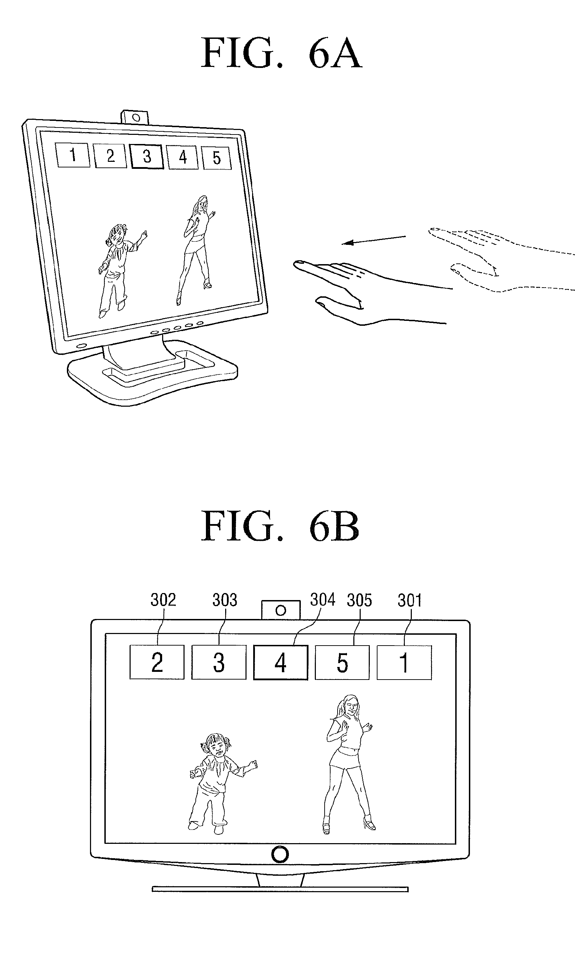

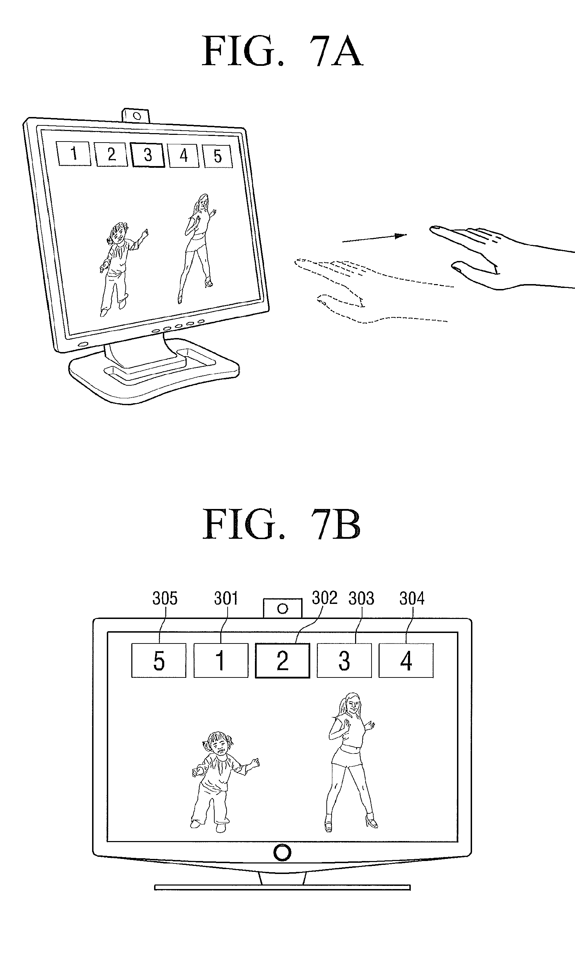

The manner of scrolling items of the user menu rotationally will be explained below with reference to FIGS. 6A, 6B, 7A and 7B. FIGS. 6A and 6B are views illustrating a screen on which a menu is scrolled leftward in accordance with a leftward hand gesture, according to an exemplary embodiment of the present invention.

Referring to FIG. 6A, the first to fifth items 301, 302, 303, 304, 305 are displayed in sequence. In response to a user's leftward hand gesture, the TV 100 presents a user menu as the one illustrated in FIG. 6B, which is scrolled leftward by one item.

Accordingly, as illustrated in FIG. 6B, the first item 301 at the left-most side is moved to the right-most side, and the rest of the items, that is, the second to fifth items 302, 303, 304, 305 are moved leftward by one item respectively.

FIGS. 7A and 7B are views illustrating a screen on which a menu is scrolled rightward in accordance with a rightward hand gesture, according to an exemplary embodiment of the present invention.

Referring to FIG. 7A, the first to fifth items 301, 302, 303, 304, 305 are displayed in sequence. In response to a user's rightward hand gesture, the TV 100 displays a user menu as the one illustrated in FIG. 7B, in which the items 301, 302, 303, 304, 305 are scrolled rightward by one item respectively.

Accordingly, as illustrated in FIG. 7B, the fifth item 305 at the right-most side is moved to the left-most side, and the rest of the items, that is the first to fourth items 301, 302, 303, 304 are moved rightward by one item respectively.

As explained above, the TV 100 is capable of scrolling a certain limited number of items rotationally.

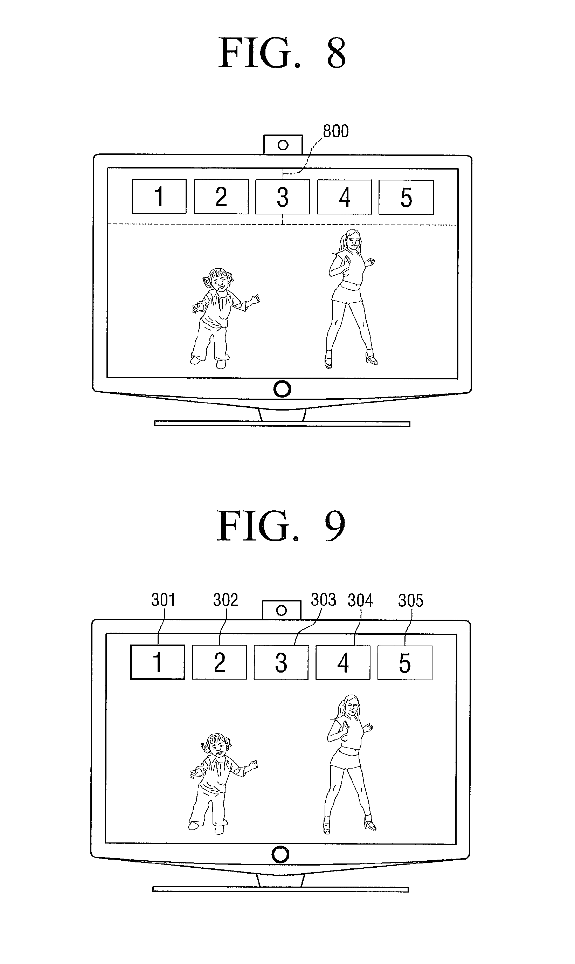

FIG. 8 is a view illustrating a screen on which a predetermined area indicated by a dotted line according to an exemplary embodiment of the present invention. Referring to FIG. 8, the TV 100 provides a predetermined location indicative line 800 in the middle portion of the screen, thereby indicating that the predetermined location is the middle portion of the screen. However, the present invention is not strictly limited to the examples mentioned above, and therefore, any method is applicable if it adequately indicates the predetermined location.

FIG. 9 is a view illustrating a screen on which a predetermined area is presented on the left-most side according to an exemplary embodiment of the present invention. Referring to FIG. 9, among the five items 301, 302, 303, 304, 305, the first item 301 is indicated with a thicker line, indicating that the predetermined location is the left-most side of the screen. The predetermined location may be set to be any portion of the screen, and the TV 100 may indicate the predetermined location as set on the screen.

FIG. 10 is a view illustrating a menu arranged in an annular pattern according to an exemplary embodiment of the present invention. Referring to FIG. 10, the user menu may include five items arranged in an annular pattern. Since each item of the menu rotates in accordance with the user input, the user can operate the user menu more instinctively.

Although it is described above that the user gestures move upward, downward, leftward and rightward directions, the TV 100 recognizes even the oblique user gestures to be one of upward, downward, leftward and rightward directions if the user gestures are within a predetermined angle range. By way of example, a hand gesture, which is oblique at an angle between 0 and 45 degrees may be considered to be within the first range with respect to the axis of the upward or downward direction, and thus recognized as the upward or downward hand gesture. Also, a hand gesture, which is oblique at an angle between 0 and 45 degrees may be considered to be within the first range with respect to the axis of the leftward or rightward direction, and thus recognized as the leftward or rightward hand gesture.

Meanwhile, although it is descried above that, if the first area is the upper portion of the screen and the menu is displayed in a horizontal layout on the first area, the second area is the lower portion of the screen, and the first direction is the downward direction, the second direction is the upward direction, the third direction is the leftward direction, and the fourth direction is the rightward direction, one will understand that other examples are adequately applicable.

By way of example, if the first area is the lower portion of the screen and the menu is displayed in a horizontal layout on the first area, the second area is the upper portion of the screen, and the first direction is the upward direction, the second direction is the downward direction, the third direction is the leftwald direction, and the fourth direction is the rightward direction.

If the first area is the left side of the screen and the menu is displayed in a vertical layout on the first area, the second area is the right side of the screen, and the first direction is the rightward direction, the second direction is the leftward direction, the third direction is the upward direction, and the fourth direction is the downward direction.

If the first area is the right side of the screen and the menu is displayed in a vertical layout on the first area, the second area is the left side of the screen, and the first direction is the leftward direction, the second direction is the rightward direction, the third direction is the upward direction, and the fourth direction is the downward direction.

Meanwhile, although the TV 100 is applied above as an example of a display apparatus, this is only for convenience of explanation. Therefore, any other types of display apparatus beside the TV 100 can be adequately applied, if the display apparatuses are capable of recognizing the user gestures.

According to the exemplary embodiments of the present invention, a display apparatus and a method for providing a user interface (UI) applicable thereto are provided, in which an item at a predetermined location is selected from among the items listed in a user menu, if the direction of a user gesture recognized by the gesture recognizing unit 160 is within the first range from the first direction in which the first direction is vertical to a direction of user menu layout. As a result, the user can operate the user menu conveniently with his bodily gestures such as hand gestures.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A display apparatus comprising:
a display unit which displays a user menu on a first area of a screen in one of a linear and annular pattern;
a gesture recognizing unit which recognizes a user gesture; and
a control unit, wherein if a direction of the user gesture recognized by the gesture recognizing unit is within a first range and from a first direction, the control unit controls an item arranged at a predetermined location on the screen to be selected from among items listed in the user menu, wherein the first direction is substantially perpendicular to a direction of the displayed user menu.

2. The display apparatus of claim 1, wherein if the selected item does not have a submenu, the control unit controls one of a corresponding function of the selected item to be executed and an icon to execute the corresponding function of the selected item to be displayed on a second area of the screen.

3. The display apparatus of claim 1, wherein if the selected item has a submenu, the control unit controls the selected item to be displayed on a second area of the screen and controls the submenu to be displayed on the first area of the screen.

4. The display apparatus of claim 3, wherein if a direction of the user gesture recognized by the gesture recognizing unit is within a first range and from a second direction, and if the submenu is displayed on the first area, the control unit controls the selected item to disappear from the second area and the user menu to be displayed on the first area, and wherein the second direction is substantially perpendicular to a direction of a the displayed submenu and opposite to the first direction.

5. The display apparatus of claim 3, wherein the display unit displays the user menu horizontally on the screen in a linear pattern, and
the first area is located at an upper portion of the screen,
the second area is located at a lower portion of the screen,
the first direction is downward with respect to the screen, and
the second direction is upward with respect to the screen.

6. The display apparatus of claim 3, wherein if a direction of the user gesture recognized by the gesture recognizing unit is within the first range and from the first direction, and if the submenu is displayed on the first area, the control unit controls a submenu item arranged at the predetermined location to be selected from among items listed in the submenu.

7. The display apparatus of claim 6, wherein if the selected item of the submenu does not have a submenu, the control unit controls one of a corresponding function of the selected item to be executed and an icon to execute the corresponding function of the selected item to be displayed on the second area of the screen, and
wherein if the selected item of the submenu has a second submenu, the control unit controls the selected item to be displayed on the second area of the screen and the second submenu of the submenu to be displayed on the first area of the screen.

8. The display apparatus of any one of claims 1 to 7, wherein if a direction of the user gesture recognized by the gesture recognizing unit is within a second range and from one of a third direction and a fourth direction, the control unit controls the items of the user menu to be scrolled in the one of the third direction and the fourth direction, wherein the one of the third and the fourth direction is substantially perpendicular with respect to the direction of the displayed user menu.

9. The display apparatus of claim 8, wherein the control unit controls the items of the user menu to be scrolled rotationally.

10. The display apparatus of claim 8, wherein the display unit displays the user menu horizontally on the screen in a linear pattern, and
the first area is located at an upper portion of the screen,
the second area is located at a lower portion of the screen,
the third direction is leftward with respect to the screen, and
the fourth direction is rightward with respect to the screen.

11. The display apparatus of any one of claims 1 to 10, wherein the control unit controls the predetermined location to be indicated on the screen.

12. The display apparatus of any one of claims 1 to 11, wherein the user gesture comprises one of a movement of the user's hand and a movement of the user's foot.

13. The display apparatus of any one of claims 1 to 12, wherein the gesture recognizing unit includes a camera which captures information regarding the user gesture.

14. A method for providing a user interface (UI), in a display apparatus capable of recognizing a user gesture, the method comprising:
displaying a user menu on a first area of a screen in one of a linear and a annular pattern;
recognizing the user gesture; and
if a direction of the user gesture recognized is within a first range from a first direction, selecting an item arranged at a predetermined location from among items listed in the user menu, wherein the first direction is substantially perpendicular to a direction of the displayed user menu.

15. The method for claim 14, wherein if the selected item does not have a submenu, the method further comprises one of executing a corresponding function of the selected item and displaying an icon to execute the corresponding function of the selected item on a second area of the screen.
